# DEMANDE DE BREVET EUROPEEN

(11) **EP 3 336 786 A1**
(43) Date de publication de la demande: **20.06.2018**
(21) Numéro de dépôt: 17208558.1
(22) Date de dépôt: 19.12.2017
(51) Int. Cl.: G06Q 10/10

(54) **PROCEDE D'EDITION D'UN MESSAGE ELECTRONIQUE AVEC ELIMINATION D'ELEMENTS REDONDANTS**

(30) Priorité: 19.12.2016 FR 1662735
(71) Demandeur: Atos Integration, 95870 Bezons (FR); GREENADDIN, 75006 Paris (FR)
(72) Inventeur: TACHNOFF, Serge, 75012 paris (FR); NGUYEN, Hugo, 75006 PARIS (FR)
(74) Mandataire: Novagraaf Technologies

(57) **Abrégé**

Procédé d'édition, à partir d'un système de messagerie électronique, d'un document allégé à partir d'un courrier électronique comprenant une succession de messages unitaires rappelés, ce procédé comprenant les opérations consistant à :
- Editer le courrier électronique ;
- Identifier dans le courrier électronique les messages unitaires rappelés ;
- Analyser chaque message unitaire rappelé ainsi identifié ;
- Détecter des éléments ayant plusieurs occurrences dans plusieurs messages unitaires rappelés ;
- Editer le document allégé en conservant au plus une occurrence unique de tout élément détecté comme ayant plusieurs occurrences.

## Description

L'invention a trait au domaine des systèmes de messagerie électronique, et plus précisément à l'édition et/ou l'impression de documents à partir des messages électroniques.

Dans les opérations consistant à répondre à ou à transférer un courrier électronique, le contenu textuel de cet ancien courrier électronique est généralement repris dans le nouveau courrier électronique, afin de permettre au destinataire de prendre connaissance de l'ancien courrier.

Lorsque des opérations de réponse ou de transfert se suivent, ce qui est fréquent au cours du cycle de vie d'un courrier électronique (qui peut s'étendre d'une journée à plusieurs semaines, voire plusieurs mois), d'anciens messages (dits messages rappelés) s'accumulent dans le nouveau courrier électronique.

Or de nombreux utilisateurs souhaitent faire de leurs courriers électroniques, y compris les plus récents, des éditions numériques (par ex. sous forme de documents au format définit par le standard ISO 32000-1 :2008, couramment dénommé PDF (Portable Document Format) ou des impressions.

L'édition d'un document au format PDF est l'équivalent électronique d'une impression physique de ce même document, dans la mesure où le document produit préserve la forme du document initial, et notamment sa mise en page, ses polices de caractère, ses éventuelles images ou autres objets graphiques (par ex. les traits de séparation, qui sont beaucoup employés par les systèmes de messagerie pour séparer des corps de messages), ou encore les liens hypertexte, à moins que la messagerie ne soit configurée en texte brut.

De sorte que, lorsque le courrier électronique est édité (ou imprimé), le document produit reprend l'ensemble du contenu du courrier électronique. Lorsque le courrier électronique inclut une chaîne d'échanges précédents (qu'il s'agisse d'un courrier de type « répondre » ou « transférer »), le document produit est inutilement long. Lorsque le document est électronique, il en résulte une consommation injustifiée inutile d'espace mémoire et, plus généralement, d'énergie. Lorsque le document est physique, il en résulte une consommation injustifiée d'encre, de papier et d'électricité.

Il est donc fréquent que l'utilisateur souhaite supprimer, dans le document à éditer (ou à imprimer), des passages qu'il ne souhaite pas voir apparaître. Le format employé pour la représentation des courriers électroniques (généralement MSG - plus rarement EML - dans le cas des messageries Microsoft® Outlook® et Exchange®) rend impossible la retouche directe du message par l'utilisateur.

Il est en effet nécessaire de suivre une séquence d'opérations qui, le plus fréquemment et dans la plupart des versions de la messagerie Microsoft® Outlook®, comprend l'ouverture du message, la sélection de l'action « modifier le message », la sélection des passages à supprimer, puis leur suppression. Le document édité ou imprimé est alors conforme au désir de l'utilisateur. Cependant, cette méthode est fastidieuse ; en outre, elle a pour inconvénient d'altérer le message si par mégarde l'utilisateur sauvegarde les modifications qu'il a apportées en vue de l'édition ou de l'impression. Il peut en résulter une perte irréversible de données.

Il a été proposé, dans le brevet européen EP 1 327 192 (Kent Ridge Digital Labs), de détecter dans les courriers électroniques d'une messagerie des contenus redondants et de supprimer les redondances directement dans les fichiers des courriers. Cette solution, qui pourrait convenir dans le cadre d'une messagerie familiale personnelle ou familiale, ne saurait convenir dans le cadre d'une messagerie professionnelle, où il est important que la traçabilité (et donc l'intégrité) des messages soit préservée.

Un premier objectif est par conséquent de proposer une méthode permettant l'édition et l'impression de documents allégés de manière automatique à partir de courriers électroniques incluant du contenu redondant.

Un deuxième objectif est de proposer une telle méthode qui permette cependant de maintenir, dans le document allégé, l'intégrité du contenu significatif présent dans les messages rappelés du courrier électronique édité.

A cet effet, il est proposé, en premier lieu, un procédé d'édition, à partir d'un système de messagerie électronique, d'un document allégé à partir d'un courrier électronique comprenant une succession de messages unitaires rappelés, ce procédé comprenant les opérations consistant à :
- Editer le courrier électronique ;
- Identifier dans le courrier électronique les messages unitaires rappelés ;
- Analyser chaque message unitaire rappelé ainsi identifié ;
- Détecter des éléments ayant plusieurs occurrences dans plusieurs messages unitaires rappelés ;
- Editer le document allégé en conservant au plus une occurrence unique de tout élément détecté comme ayant plusieurs occurrences.

Le document ainsi édité occupe un espace mémoire réduit (avec une consommation d'énergie réduite), ou, s'il s'agit d'un document destiné à l'impression, permet de réaliser des économies d'énergie (encre, papier, électricité).

L'automatisation des étapes évite à l'utilisateur de procédé à une sélection manuelle des passages à conserver en vue de l'édition ou de l'impression.

Selon diverses caractéristiques supplémentaires, prises séparément ou en combinaison :
- l'étape d'identification des messages unitaires est précédée d'une étape de détermination de la structure informatique du courrier électronique édité, et en ce que l'étape d'identification des messages unitaires rappelés comprend la détection, dans la structure informatique du courrier électronique, d'au moins l'un des éléments parmi :
   ∘ un champ d'en-tête ;
   ∘ dans un corps du message, une signature et/ou une mention d'avertissement (par ex. une mention d'avertissement légal, une mention à caractère environnemental, une mention d'avertissement concernant les virus informatiques).
- la détection d'un champ d'en-tête, d'une signature ou d'un avertissement légal dans le premier message unitaire rappelé analysé est suivie d'une étape de mémorisation, dans un dictionnaire, de l'élément détecté, et la détection de tout nouvel élément dans un autre message rappelé du courrier électronique est suivie d'une comparaison de cet élément aux éléments mémorisés de même nature ;
- l'élément comparé est supprimé du document allégé s'il est identique à un élément déjà mémorisé ;
- la détection d'un champ d'en-tête comprend la détection de l'un au moins des mots-clés suivants, situé en tête d'une ligne de caractères : de, à, date, envoyé, Cc, copie, objet, sujet, re ;
- la détection d'un champ d'en-tête comprend la détection de l'un au moins des mots précités, lorsqu'il est suivi du symbole « : » ; ;
- la détection d'une signature comprend la détection, dans le corps du message, de l'un au moins des mots-clés suivants, situé en tête d'une ligne de caractères : mail, email, courriel, web, site, blog, téléphone, tel, fax, mobile, adresse, assistant, assistante, chef, direction, directeur, manager, consultant, ingénieur, quai, rue, avenue, impasse, chemin, projet, projets, ou leurs équivalents dans toute autre langue ;
- la détection d'une signature comprend la détection de l'un au moins des mots précités, lorsqu'il est suivi du symbole « : » ; ;
- la détection d'une signature comprend la détection d'au moins une chaîne de caractère affectée d'un lien hypertexte ;
- la détection d'une signature comprend la détection d'au moins une image ;
- il est prévu la suppression, dans le document allégé, de toute image détectée dans le courrier électronique ;
- la détection d'une signature ignore la présence de toute image éventuelle ;
- la détection d'une mention d'avertissement légal comprend la détection de l'un au moins des mots-clés suivants : avertissement, disclaimer, message, internet, information, erreur, virus, émetteur, expéditeur, intégrité, environnement, responsabilité, confidentiel, règlementation, interdit, mention, légale, courriel, divulgation, destinataire, privilège, adresse, communication, publication, utiliser, document, transmis, électronique, responsable, pièces jointes, avertir, service, altération, contenu, diffusion, client, immédiatement, transmission ou leurs équivalents dans toute autre langue, éventuellement employés dans des pays dont la langue officielle n'est pas celle-ci ;
- l'étape d'édition du courrier électronique est suivie d'une étape de détection, dans le courrier électronique, d'au moins une barre de séparation ;
- la barre détectée est remplacée, dans le document allégé, par une barre plus fine ;
- il est prévu une opération de détection de tout lien hypertexte dans le courrier électronique, le document édité étant dépourvu de tout lien hypertexte ;
- il est prévu une opération de détection de toute surbrillance dans le courrier électronique, le document édité étant dépourvu de toute surbrillance ;
- le procédé comprend la suppression de tous les messages unitaires rappelés.

Il est proposé, en deuxième lieu, un procédé d'impression d'un document électronique à partir d'un courrier électronique comprenant une succession de messages unitaires rappelés, ce procédé comprenant, outre la succession d'étapes du procédé d'édition tel qu'exposé ci-dessus, une étape d'impression du document allégé édité.

D'autres objets et avantages de l'invention apparaîtront à la lumière de la description d'un mode de réalisation.

Un courrier électronique (également appelé « email ») est un document généré par un système de messagerie électronique et échangé, via un réseau de télécommunications, entre un expéditeur et un ou plusieurs destinataires.

Un courrier électronique se caractérise par une structure électronique, laquelle comprend :
- une enveloppe, qui a pour fonction de permettre l'acheminement du courrier, et se présente sous forme d'une description débutant par le terme « from » et contenant les données nécessaires au transport (et au relais) du courrier, incluant les adresses électroniques (constituée deux chaînes de caractères séparées par le caractère @) de l'expéditeur et celle(s) du ou des destinataires, et les données d'horodatage introduites par les serveurs relayant le courrier ;
- un message, lui-même composé de deux éléments :
   ∘ un bloc d'en-tête comprenant des champs d'en-tête, sous forme d'une succession de lignes de texte contenant chacune une description d'un paramètre du message, dont, notamment :
      - une ligne de texte renseignant l'émetteur et comprenant, à son début, le terme « from » (ou « de »), suivi de l'adresse électronique de l'expéditeur, éventuellement précédée ou suivi d'un alias ;
      - une ligne de texte renseignant le(s) destinataire(s) et comprenant, à son début, le terme « to » ou (« à »), suivi de l'adresse du (ou de chaque) destinataire, éventuellement précédée ou suivie d'un alias ;
      - une ligne de texte renseignant la date (et éventuellement l'heure) de création ou d'envoi du courrier, et contenant cette date (et éventuellement cette heure), à un format standard de date (respectivement d'heure) ;
   ∘ un corps de message, qui se présente sous forme d'un bloc contenant du texte et/ou des images et/ou, le cas échéant, d'autres objets électroniques, tel que des liens hypertexte cliquables ou des formes géométriques, notamment une ou plusieurs barre(s) de séparation.

Fréquemment, un courrier électronique inclut, dans son corps, tout ou partie du contenu d'au moins un autre message, dit « message rappelé », qui porte une date ou une heure antérieure à celle du courrier électronique précité et qui a déjà été envoyé, reçu ou transféré par l'expéditeur de ce courrier électronique ou par un tiers.

Il est même fréquent qu'un courrier électronique contienne plusieurs messages rappelés qui constituent ainsi une suite ou une chaîne de discussion à laquelle fait suite (et se réfère) le courrier électronique.

Ci-dessous figure un exemple de courrier électronique imaginaire (toute ressemblance avec des personnes existantes étant fortuite) tel qu'il se présente pour un utilisateur à partir d'une messagerie électronique ordinaire, telle que Microsoft® Outlook®, à partir de l'adresse jack@johndoeslawyer, destinataire de ce courrier (on suppose que cette adresse correspond à la personne de l'utilisateur) :

| |
|---|
| De : John Doe [Mailto : johndoe@imastupid.com] |
| Envoyé : Jeudi 16 mars 2017 |
| A : Mon Avocat [Mailto : jack@johndoeslawyer.com] |
| Objet : Re : Re : Re : Votre commande n°20161231 |
| |
| Maître, |
| |
| Je joins un échange de courriers électroniques. |
| |
| Je pense avoir été trompé. Que puis-je faire ? |
| |
| John Doe |
| 1, rue du Trop Bête |
| 75015 PARIS |
| Tél. 0140 40 40 |
| |
| De : Les Voleurs [Mailto : info@bigthiefs.biz] |
| Envoyé : Jeudi 16 mars 2017 |
| A : John Doe [Mailto : johndoe@imastupid.com] |
| Objet : Re : Re : Re : Re : Votre commande n°20161231 |
| |
| Monsieur, |
| |
| Comme indiqué dans les conditions générales de vente, la marchandise payée n'est pas remboursée. |
| |
| Nous vous adresserons prochainement un questionnaire de satisfaction. |
| |
| Les Voleurs |
| 1, Avenue de l'Entourloupe |
| 75001 PARIS |
| Tél. 0800 00 00 |
| www.counterfeiters.com |
| |
| Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire. |
| De : John Doe [Mailto : johndoe@imastupid.com] |
| Envoyé : Mercredi 15 mars 2017 |
| A : Les Voleurs [Mailto : info@bigthiefs.biz] |
| Objet : Re : Re : Re : Votre commande n°20161231 |
| |
| Messieurs, |
| |
| Je n'ai toujours pas reçu ma marchandise. |
| |
| Je souhaite être remboursé. |
| |
| John Doe |
| 1, rue du Trop Bête |
| 75015 PARIS |
| Tél. 0140 40 40 |
| |
| De : Les Voleurs [Mailto : info@lesvoleurs.biz] |
| Envoyé : Mercredi 11 janvier 2017 |
| A : John Doe [Mailto : johndoe@imastupid.com] |
| Objet : Re : Re : Votre commande n°20161231 |
| |
| Monsieur, |
| |
| Le délai de 48 heures est compté à partir du départ usine. |
| |
| Renseignement pris, votre marchandise n'a toujours pas été fabriquée. |
| |
| Les Voleurs |
| 1, Avenue de l'Entourloupe |
| 75001 PARIS |
| Tél. 0800 00 00 |
| www.counterfeiters.com |
| |
| Avertissement - Ce message électronique et tous les fichiers attachés qu'il |
| contient sont confidentiels et destinés exclusivement à l'usage de la |
| personne à laquelle ils sont adressés. Si vous avez reçu ce message par |
| erreur, merci d'en avertir immédiatement l'expéditeur et de le détruire. |
| |
| De : John Doe [Mailto : johndoe@imastupid.com] |
| Envoyé : Mardi 10 janvier 2017 |
| A : Les Voleurs [Mailto : info@lesvoleurs.biz] |
| Objet : Re : Votre commande n°20161231 |
| |
| Messieurs, |
| |
| Je n'ai toujours pas reçu ma marchandise. |
| |
| Vous indiquiez un délai de 48 heures. |
| |
| Qu'en est-il ? |
| |
| John Doe |
| 1, rue du Trop Bête |
| 75015 PARIS |
| Tél. 0140 40 40 |
| |
| De : Les Voleurs [Mailto : info@bigthiefs.com] |
| Envoyé : Dimanche 1 janvier 2017 |
| A : John Doe [Mailto : johndoe@imastupid.com] |
| Objet : Votre commande n°20161231 |
| |
| Monsieur, |
| |
| Nous avons pris en compte votre commande. |
| |
| Votre marchandise vous sera livrée sous un délai de 48 heures. |
| |
| Les Voleurs |
| 1, Avenue de l'Entourloupe |
| 75001 PARIS |
| Tél. 0800 00 00 |
| www.counterfeiters.com |
| |
| Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire. |

On voit que ce courrier électronique, ci-après dénommé « courrier à éditer », lisible sur la boîte de messagerie électronique *jack@johndoeslawyer.com,* comprend une succession de plusieurs messages unitaires, à savoir, dans le sens vertical descendant :
- en premier lieu, un message principal, ci-après noté Msg#0, dernier en date, envoyé à l'adresse *jack@johndoeslawyer.com,* et dont le contenu est le suivant :

| | |
|---|---|
| Msg#0 | De : John Doe [Mailto : johndoe@imastupid.com] |
| | Envoyé : Jeudi 16 mars 2017 |
| | A : Mon Avocat [Mailto : jack@iohndoeslawyer.com] |
| | Objet : Re : Re : Re : Votre commande n°20161231 |
| | |
| | Maître, |
| | |
| | Je joins un échange de courriers électroniques. |
| | |
| | Je pense avoir été trompé. Que puis-je faire ? |
| | |
| | John Doe |
| | 1, rue du Trop Bête |
| | 75015 PARIS |
| | Tél. 0140 40 40 |

- en deuxième lieu, une succession de messages unitaires rappelés, ci-après notés Msg#i, où i est un nombre entier et dont les contenus respectifs sont les suivants (ici par ordre vertical descendant, ce qui correspond à un ordre chronologique décroissant) :

| | |
|---|---|
| Msg#1 | De : Les Voleurs [Mailto : info@bigthiefs.biz] |
| | Envoyé : Jeudi 16 mars 2017 |
| | A : John Doe [Mailto : johndoe@imastupid.com] |
| | Objet : Re : Re : Re : Re : Votre commande n°20161231 |
| | |
| | Monsieur, |
| | |
| | Comme indiqué dans les conditions générales de vente, la marchandise payée n'est pas remboursée. |
| | Nous vous adresserons prochainement un questionnaire de satisfaction. |
| | |
| | Les Voleurs |
| | 1, Avenue de l'Entourloupe |
| | 75001 PARIS |
| | Tél. 0800 00 00 |
| | www.counterfeiters.com |
| | |
| | Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire. |
| | |
| Msg#2 | De : John Doe [Mailto : johndoe@imastupid.com] |
| | Envoyé : Mercredi 15 mars 2017 |
| | A : Les Voleurs [Mailto : info@bigthiefs.biz] |
| | Objet : Re : Re : Re : Votre commande n°20161231 |
| | |
| | Messieurs, |
| | |
| | Je n'ai toujours pas reçu ma marchandise. |
| | |
| | Je souhaite être remboursé. |
| | |
| | John Doe |
| | 1, rue du Trop Bête |
| | 75015 PARIS |
| | Tél. 0140 40 40 |
| | |
| | |
| Msg#3 | De : Les Voleurs [Mailto : info@lesvoleurs.biz] |
| | Envoyé : Mercredi 11 janvier 2017 |
| | A : John Doe [Mailto : johndoe@imastupid.com] |
| | Objet : Re : Re : Votre commande n°20161231 |
| | |
| | Monsieur, |
| | |
| | Le délai de 48 heures est compté à partir du départ usine. |
| | |
| | Renseignement pris, votre marchandise n'a toujours pas été fabriquée. |
| | |
| | Les Voleurs |
| | 1, Avenue de l'Entourloupe |
| | 75001 PARIS |
| | Tél. 0800 00 00 |
| | www.counterfeiters.com |
| | |
| | Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire. |
| | |
| Msg#4 | De : John Doe [Mailto : johndoe@imastupid.com] |
| | Envoyé : Mardi 10 janvier 2017 |
| | A : Les Voleurs [Mailto : info@lesvoleurs.biz] |
| | Objet : Re : Votre commande n°20161231 |
| | |
| | Messieurs, |
| | |
| | Je n'ai toujours pas reçu ma marchandise. |
| | |
| | Vous indiquiez un délai de 48 heures. |
| | |
| | Qu'en est-il ? |
| | |
| | John Doe |
| | 1, rue du Trop Bête |
| | 75015 PARIS |
| | Tél. 0140 40 40 |
| | |
| Msg#5 | De : Les Voleurs [Mailto : info@bigthiefs.com] |
| | Envoyé : Dimanche 1 janvier 2017 |
| | A : John Doe [Mailto : johndoe@imastupid.com] |
| | Objet : Votre commande n°20161231 |
| | |
| | Monsieur, |
| | |
| | Nous avons pris en compte votre commande. |
| | |
| | Votre marchandise vous sera livrée sous un délai de 48 heures. |
| | |
| | Les Voleurs |
| | 1, Avenue de l'Entourloupe |
| | 75001 PARIS |
| | Tél. 0800 00 00 |
| | www.counterfeiters.com |
| | |
| | Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire. |

Chaque message présente une structure ordinaire, et comprend un bloc d'en-tête suivi d'un corps de message. A titre d'exemple, le message rappelé Msg#5 comprend :
- le bloc d'en-tête suivant :
   De : Les Voleurs [Mailto : info@bigthiefs.com]
   Envoyé : Dimanche 1 janvier 2017
   A : John Doe [Mailto : johndoe@imastupid.com]
   Objet : Votre commande n°20161231
- le corps de message suivant :
   Monsieur,
   Nous avons pris en compte votre commande.
   Votre marchandise vous sera livrée sous un délai de 48 heures.
   Les Voleurs
   1, Avenue de l'Entourloupe
   75001 PARIS
   Tél. 0800 00 00
   www.counterfeiters.com
   Attention ! le site Les Voleurs n'est pas responsable de l'utilisation qui est faite de ses données en ligne. Les limites de la responsabilité du site Les Voleurs sont définies dans les Conditions Générales de Vente. Les articles ayant fait l'objet d'un paiement ne sont ni repris ni remboursés.

Le corps de chaque message comprend lui-même :
- un contenu significatif, qui se présente ici sous forme d'un texte contenant une ou plusieurs phrases, par ex., dans le cas du message rappelé Msg#5 :
   Monsieur,
   Nous avons pris en compte votre commande.
   Votre marchandise vous sera livrée sous un délai de 48 heures.
- une signature, qui se présente sous forme d'un bloc de lignes contenant des informations relatives à l'identité et, le cas échéant, les coordonnées physiques de l'expéditeur du message ; par exemple, dans le cas du message rappelé Msg#5 :
   Les Voleurs
   1, Avenue de l'Entourloupe
   75001 PARIS
   Tél. 0800 00 00
   www.counterfeiters.com
- le cas échéant, une mention d'avertissement (par ex. une mention légale, une mention à caractère environnemental, ou encore une mention d'avertissement concernant les virus informatiques), sous forme d'un bloc de lignes (ou d'un paragraphe unitaire) contenant des informations générales, qui ne concernent pas que le destinataire mais peuvent concerner des tiers lecteurs et relatives par ex. au traitement de l'information et à la responsabilité respective de l'expéditeur, du destinataire et éventuellement des tiers, par ex., dans le cas du message rappelé Msg#5 !
   Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire.

Bien que le contenu du courrier électronique à éditer soit donné à titre d'exemple, il permet d'illustrer la problématique à laquelle est confrontée l'utilisateur (ici le destinataire du courrier à éditer) lorsqu'il souhaite faire de ce courrier une édition, soit sous forme d'un document électronique (typiquement au format PDF) en vue d'un archivage, soit sous forme d'un document imprimé.

En effet, l'utilisateur (ici l'utilisateur de la boîte *jack@johndoeslawyer.com*) peut souhaiter conserver, pour les nécessités de son activité et/ou pour ses archives, le contenu des échanges, c'est-à-dire le contenu du message principal Msg#0 ainsi que celui des messages rappelés Msg#i, tout en souhaitant faire l'économie des répétitions de certains éléments, comme les signatures.

De même, il peut être souhaitable que les barres de séparation, par exemple des types suivants : 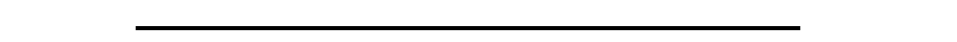 ou encore : 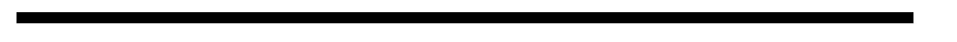 éventuellement associée à un nom, par ex. : DOE, John 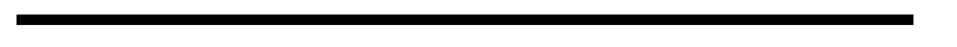 soient supprimées ou, à tout le moins, affinées pour économiser de la mémoire (dans le cas d'un document électronique) ou de l'encre (dans le cas d'un document imprimé).

C'est pourquoi il est proposé un procédé d'édition, à partir d'un système de messagerie électronique (tel que Microsoft® Outlook®), d'un document allégé à partir d'un courrier électronique (tel que le courrier à éditer ci-dessus) comprenant une succession de messages unitaires rappelés, où le document allégé reprend une première partie du contenu (notamment le contenu significatif des messages rappelés) du courrier à éditer, tout en délaissant une autre partie du contenu (notamment les répétitions des signatures).

Ce procédé d'édition une première opération d'édition du courrier électronique. Cette opération est conduite de manière classique dans le système de messagerie électronique, par ex. par double-clic sur la ligne de message qui apparaît dans l'historique des éléments reçus (ou envoyés, ou dans tout autre dossier dans lequel le courrier peut avoir été archivé par l'utilisateur ou de manière automatique par le système de messagerie).

L'édition du courrier électronique se traduit, du point de vue de l'utilisateur, par l'ouverture d'une fenêtre dans laquelle le contenu du message est affiché, tel que présenté dans l'exemple ci-dessus.

Parallèlement à cet affichage, le système charge en mémoire la structure informatique du courrier électronique, qui se présente sous forme d'un fichier de données dont le format est conforme à un modèle objet fourni par le système. Dans le cas de Microsoft® Outlook®, le modèle objet est dénommé Mailltem, et sa syntaxe a la forme suivante :
<[% 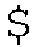 TOPIC/bb643865_en-us_office_15_1_0_0_0_0%]("00063034- 0000-0000-C000-000000000046")> _
<[% 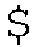 TOPIC/bb643865_en- us_office_15_1_0_0_0_1%](GetType([% 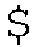 TOPIC/bb643865_en- us_office_15_1_0_0_0_2%]))> _
PublicInterfaceMailItem _
   Inherits[% 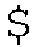 TOPIC/bb643865_en-us_office_15_1_0_0_0_3%], [% 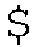 TOPIC/bb643865_en-us_office_15_1_0_0_0_4%] DiminstanceAsMailItem
[[% 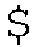 TOPIC/bb643865_en-us_office_15_1_0_2_0_0%]("00063034- 0000-0000-C000-000000000046")]
[[% 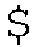 TOPIC/bb643865_en- us_office_15_1_0_2_0_1%](typeof([% 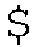 TOPIC/bb643865_en- us_office_15_1_0_2_0_2%]))]
publicinterfaceMailItem : [% 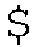 TOPIC/bb643865_en- us_office_15_1_0_2_0_3%],
[% 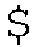 TOPIC/bb643865_en-us_office_15_1_0_2_0_4%]

La structure informatique du courrier électronique contient toutes les informations (suivant la syntaxe spécifiée ci-dessus dans le cas de Microsoft® Outlook®) permettant d'éditer le courrier dans la fenêtre affichée par le système à destination de l'utilisateur.

Une deuxième étape consiste à identifier, dans le courrier électronique, les messages unitaires rappelés Msg#i. Ces messages rappelés Msg#i (où i est strictement supérieur à 1) vont en effet (à l'exception du message principal Msg#0) faire l'objet d'un élagage en vue de l'édition du document allégé.

Cette identification est faite de manière automatique par détection d'une barre de séparation ou d'un bloc d'en-tête, qui comprend un ou plusieurs champ(s) d'en-tête.

Selon un mode de réalisation, la détection d'un champ d'en-tête comprend la détection d'au moins un mot-clé, situé en tête d'une ligne de caractères, et choisi parmi une liste prédéfinie de mots-clés. Selon un mode de réalisation particulier, cette liste comprend par exemple les mots suivants : de, à, date, envoyé, Cc, copie, objet, sujet. Cette liste, non exhaustive et fournie à titre d'exemple illustratif simple, comprend des mots que l'on trouve habituellement, dans la langue de la présente demande, dans les champs d'en-tête. Cependant, la liste les mots-clés peut comprendre des mots choisis dans toute autre langue, ou dans plusieurs langues. En effet, les éléments (bloc d'en-tête, corps) d'un message rappelé ne sont pas traduits par le système de messagerie et sont repris tels quels dans le courrier électronique. Il peut donc être utile de constituer une liste de mots-clés comprenant des mots dans plusieurs langues, typiquement Anglais, Français, Espagnol, Allemand.

Ainsi, un exemple de liste multilingue des mots-clés employés pour détecter les blocs d'en-tête comprend les mots suivants : from, de, von, to, à, a, nach, date, fecha, datum, sent, envoyé, espedido, geschickt, cc, copy, copie, copia, Kopie, object, objet, Objekt, objeto, subject, sujet, tema.

On notera qu'il n'est pas nécessairement souhaitable d'omettre du document allégé les informations contenues dans les blocs d'en-tête.

En revanche, il peut être avantageux de les présenter sous forme abrégée.

Ainsi, le bloc d'en-tête suivant :
De : Les Voleurs [Mailto : info@bigthiefs.com]
Envoyé : Dimanche 1 janvier 2017
A : John Doe [Mailto : johndoe@imastupid.com]
Objet : Votre commande n°20161231

peut être reformaté sous la forme suivante en omettant certains champs, en supprimant certaines informations (par ex. une adresse électronique lorsqu'un alias est disponible), en les concaténant et/ou en en modifiant la structure (par ex. une date longue peut être reformatée dans un format abrégé tel que JJ/MM/AAAA ou MM/JJ/AAAA) :
De : Les Voleurs, 01/01/2017

Quoi qu'il en soit, la détection du bloc d'en-tête de chaque message peut être accompagnée d'une opération de sauvegarde, dans une base de données, des données contenues dans les champs d'entête. Ainsi, dans le cas présent, le contenu du champ d'en-tête « De », qui comprend un alias : « Les Voleurs » et une adresse : « info@bigthiefs.com », peut être mémorisé dans la base de données, de préférence dans deux entrées distinctes liées entre elle : une première entrée pour l'alias, une seconde pour l'adresse.

Une troisième étape consiste à analyser chaque message unitaire rappelé ainsi identifié. Un objectif de cette étape est de détecter, dans chaque message rappelé, le corps du message, qui peut comprendre des éléments ou informations redondant(e)s qu'il peut être souhaitable d'omettre dans le document allégé.

Pour détecter le corps d'un message rappelé, il n'est pas indispensable de disposer en mémoire d'une liste de mots-clés prédéfinis (quelle qu'en soit la langue). En effet, un corps de message rappelé s'étend entre :
- une limite haute, qui est nécessairement un bloc d'en-tête (détecté par la méthode décrite ci-dessus, et éventuellement précédé d'une barre de séparation) ;
- une limite basse, qui peut être :
   ∘ le bas de page du courrier électronique,
   ∘ ou une barre de séparation,
   ∘ ou encore un autre bloc d'en-tête (détecté par la méthode décrite ci-dessus).

Cette étape d'analyse comprend avantageusement la détection de l'un au moins des éléments suivants :
- signature ;
- mention d'avertissement (par ex. une mention d'avertissement légal, une mention à caractère environnemental, une mention d'avertissement concernant les virus informatiques).

Eventuellement, l'étape d'analyse peut comprendre la détection, dans le corps de message, de contenu significatif, c'est-à-dire de contenu généré ou intégré par l'expéditeur du message, autre qu'une signature et une mention d'avertissement.

La détection d'une signature et/ou d'une mention d'avertissement est prioritaire sur celle de contenu significatif car il s'agit d'élément qu'il est possible de simplifier sans qu'une analyse linguistique soit nécessaire.

Il est possible de détecter une signature ou une mention d'avertissement en détectant l'occurrence de mots-clés, car la plupart des signatures et des mentions d'avertissement sont généralement formatées.

Ainsi, une signature comprend généralement, sur une succession de lignes sans interligne, des informations qui contiennent au moins une adresse postale et/ou un numéro de téléphone. Une adresse postale peut être détectée par un code postal (Zip code) ou un mot désignant un type de voie ; un numéro de téléphone peut être détecté par une succession de chiffres, éventuellement séparés par des espaces et contenant suivant, en tant que préfixe, le caractère « + ».

En pratique, la détection d'une signature comprend par ex. la détection, dans le corps du message, de l'un au moins des mots-clés suivants, situé en tête d'une ligne de caractères : mail, email, courriel, web, site, blog, téléphone, tel, fax, mobile, adresse, assistant, assistante, chef, direction, directeur, manager, consultant, ingénieur, quai, rue, avenue, impasse, chemin, ou leurs équivalents dans une ou plusieurs autres langues. La détection de la signature peut également comprendre la détection d'une succession de chiffres voisin (ou adjacents), ce qui caractérise l'énoncé d'un numéro de téléphone. La détection d'une signature peut, également, comprendre la détection d'une chaîne de caractères associés à un lien hypertexte (qui peut caractériser l'énoncé d'une adresse de messagerie électronique ou un lien vers un site Internet).

A titre d'exemple, la signature présente dans le corps du message rappelé Msg#5 peut être détectée par la présence, dans une succession de lignes sans interligne, de deux mots-clés (« avenue » et « Tél ») présent dans la liste ci-dessus, et d'une séquence de chiffres (0800 00 00), caractéristique d'un numéro de téléphone :
Les Voleurs
1, Avenue de l'Entourloupe
75001 PARIS
Tél. 0800 00 00
www.counterfeiters.com

De même, une mention d'avertissement comprend généralement, sur une succession de lignes sans interligne (voire même d'un seul bloc), des informations qui contiennent, typiquement dans le cas d'une mention légale, des mots-clés caractéristiques des réserves et/ou préconisations juridiques faites par l'expéditeur du message ou par son organisation.

En pratique, la détection d'une mention d'avertissement comprend par ex. la détection, dans le corps du message, de l'un au moins des mots-*clés suivants : avertissement, disclaimer, message, internet, information, erreur, virus, émetteur, expéditeur, intégrité, environnement, responsabilité, confidentiel, règlementation, interdit, mention, légale, courriel, divulgation, destinataire, privilège, adresse, communication, publication, utiliser, document, transmis, électronique, responsable, pièces, jointes, avertir, service, altération, contenu, diffusion, client, immédiatement, transmission, ou leurs équivalents dans une ou plusieurs autres langues.

Signature et mention d'avertissement sont fréquemment situées à la fin du corps de message. Par conséquent, pour accélérer l'analyse, il est préférable de procéder à la détection de la signature et/ou de la mention légale en débutant par le bas du corps de message, puis en remontant celui-ci. Cette méthode permet de se dispenser de l'analyse du contenu significatif puisque, dans l'hypothèse où une signature et/ou une mention égale existent dans le corps de message, ces éléments sont détectés avant que la dernière ligne du contenu significatif ne soit explorée.

L'étape d'analyse peut également comprendre la détection (avantageusement systématique) de la présence :
- de tout lien hypertexte (consommateur de ressources mémoires) ;
- et/ou de toute surbrillance (consommateur d'énergie et, dans le cas d'une impression, d'encre de couleur).

Cette étape d'analyse est suivie d'une étape de mémorisation, dans une base de données dictionnaire, de l'élément détecté (signature et/ou mention d'avertissement).

L'analyse de la signature peut être suffisamment fine pour discriminer un nom et/ou un prénom (le cas échéant associés), une adresse postale, un numéro de téléphone, une adresse électronique. Ces informations sont couramment disposées sur des lignes distinctes. Il est par conséquent possible de les mémoriser, dans la base de données, dans plusieurs entrées distinctes respectives : une première entrée pour le nom, une deuxième entrée pour l'adresse, une troisième entrée pour le numéro de téléphone, une quatrième, le cas échéant, pour l'adresse électronique.

Compte tenu de la structure de la signature, la mémorisation dans la base de données de la signature détectée dans le message rappelé Msg#5 peut être réalisée de la manière suivante dans une entrée « signature » associée à ce message :
Les Voleurs > Nom
1, Avenue de l'Entourloupe, 75001 PARIS > Adresse
0 800 00 00 > Téléphone

On notera que la détection d'une signature peut comprendre la détection d'une image. Cette détection peut être conduite de manière classique par détection d'un objet électronique intégré au corps du message dans un format correspondant habituellement à une image (tel que .gif, .pdf, .bmp). Cette image peut être mémorisée dans une entrée de la base de données, associée aux données de signature.

A contrario, pour simplifier (et donc abréger) la procédure, la détection de la signature peut, d'office, ignorer la présence d'images éventuelles.

Comme la signature, la mention légale est avantageusement mémorisée dans une entrée dédiée de la base de données.

Ainsi, pour le message rappelé Msg#5, la mémorisation de la mention légale peut être réalisée de la manière suivante dans une entrée « mention légale » associée à ce message :
Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire. > Mention légale

Ces étapes d'analyse (et plus précisément la détection d'un bloc d'en-tête et la détection d'une signature et/ou d'une mention légale) sont répétées pour l'ensemble des messages rappelés Msg#i pour i=1 à N, où N est le nombre de messages rappelés.

On notera que l'incrémentation de l'indice i peut correspondre à un balayage du courrier électronique de haut en bas (i=1 correspondant ainsi au premier message rappelé sous le message principal Msg#0 et i=N correspondant au dernier message rappelé dans l'ordre descendant) ou, inversement, de bas en haut (i=1 correspondant ainsi au dernier message rappelé dans le courrier électronique, et i=N correspondant au premier message rappelé sous le message principal Msg#0).

L'analyse de chaque message Msg#i rappelé suivant est avantageusement suivie d'une opération de comparaison de chaque élément détecté (bloc ou champ d'en-tête, signature ou mention légale) aux éléments de même nature (signature ou, respectivement, mention légale) déjà mémorisés pour les messages rappelés déjà analysés.

Cette comparaison vise à détecter des éléments ayant plusieurs occurrences dans plusieurs messages unitaires rappelés, afin d'en conserver au plus une occurrence dans le document allégé.

Pour effectuer cette comparaison, on compare chaque élément détecté avec l'élément correspondant de même nature dans la base de données.

A titre d'exemple, à supposer que l'analyse des messages rappelés soit effectuée dans le sens croissant de l'incrémentation, la signature suivante, détectée dans le message rappelé Msg#4 :
John Doe
1, rue du Trop Bête
75015 PARIS
Tél. 0140 40 40

...est identique à la signature déjà détectée dans le message rappelé Msg#2 (et mémorisée dans la base de données).

De même, la mention d'avertissement (ici une mention légale) suivante, détectée dans le message rappelé Msg#3 :
Avertissement - Ce message électronique et tous les fichiers attachés qu'il contient sont confidentiels et destinés exclusivement à l'usage de la personne à laquelle ils sont adressés. Si vous avez reçu ce message par erreur, merci d'en avertir immédiatement l'expéditeur et de le détruire.

...est identique à la mention d'avertissement déjà détectée dans le message rappelé Msg#1 (et mémorisée dans la base de données).

L'exemple de mention d'avertissement fourni ci-dessus est une mention légale ; il peut s'agir d'une mention environnementale, telle que :
Pour un développement durable, anticipons pour notre avenir. N'imprimez ce courrier électronique que si cela est strictement nécessaire.

...ou d'un avertissement relatif aux anti-virus :
Ce courrier électronique ne contient aucun virus ou logiciel malveillant car la protection antivirus était active lors de son envoi.

Une fois les multiples occurrences ainsi détectée, le document allégé peut être édité, en conservant au plus une occurrence unique de tout élément détecté comme ayant plusieurs occurrences.

Selon un mode particulier de réalisation, un élément comparé est supprimé du document allégé s'il est identique à un élément déjà mémorisé. En variante, l'élément comparé peut être lui-même allégé. Ainsi, dans une signature ayant plusieurs occurrence, il est envisageable, dans le document allégé, de conserver la première (ou la dernière occurrence) de la signature complète, et, pour chaque nouvelle occurrence, de ne conserver que le nom identifié, qu'il suffit d'extraire de l'entrée correspondante de la base de données.

Toute image détectée (le cas échéant) dans le courrier électronique ou, plus précisément, dans l'un quelconque des messages rappelés, est avantageusement omise du document allégé (c'est-à-dire supprimée dans celui-ci).

De même, le document allégé est avantageusement vide de tout lien hypertexte. Les chaînes de caractères qui, dans le courrier électronique analysé, étaient associés à un lien hypertexte peuvent cependant être conservées.

Comme les liens hypertexte, les surbrillances détectées dans le courrier électronique sont avantageusement supprimées du document allégé.

Il peut également être prévu une étape spécifique de détection, dans le courrier électronique, d'au moins une barre de séparation entre deux messages rappelés.

La présence de barres de séparation dans la correspondance électronique vise à en rendre la lecture plus claire, car elles permettent d'identifier visuellement la limite des messages rappelés. Cependant, il n'est pas nécessaire, dans le message allégé, de conserver la taille et la police de caractère de la barre de séparation initiale.

Ainsi, selon un mode de réalisation avantageux, chaque barre de séparation détectée est remplacée, dans le document allégé, par une barre plus fine.

Ainsi, une barre détectée qui se présente par ex. ainsi dans le courrier électronique :

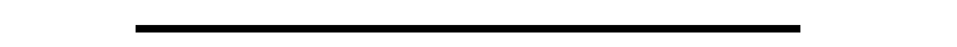

...est remplacée dans le document allégé par une barre plus fine, qui se présente par ex. ainsi :

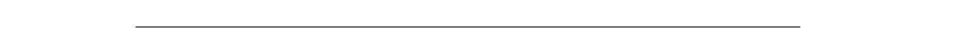

Ainsi, in fine, le document allégé (c'est-à-dire la version allégée du courrier électronique) peut se présente par ex. ainsi :

| |
|---|
| JACK |
| De : John Doe, 16/03/2017 |
| Objet : Re : Re : Re : Votre commande n°20161231 |
| |
| Maître, |
| |
| Je joins un échange de courriers électroniques. |
| |
| Je pense avoir été trompé. Que puis-je faire ? |
| |
| John Doe |
| 1, rue du Trop Bête |
| 75015 PARIS |
| Tél. 0140 40 40 |
| |
| De : Les Voleurs, 16/03/2017 |
| A : John Doe |
| |
| Monsieur, |
| |
| Comme indiqué dans les conditions générales de vente, la marchandise payée n'est pas remboursée. |
| |
| Nous vous adresserons prochainement un questionnaire de satisfaction. |
| |
| Les Voleurs |
| 1, Avenue de l'Entourloupe |
| 75001 PARIS |
| Tél. 0800 00 00 |
| www.counterfeiters.com |
| |
| Attention ! le site Les Voleurs n'est pas responsable de l'utilisation qui est faite de ses données en ligne. Les limites de la responsabilité du site Les Voleurs sont définies dans les Conditions Générales de Vente. Les articles ayant fait l'objet d'un paiement ne sont ni repris ni remboursés. |
| De : John Doe, 15/03/2017 |
| A : Les Voleurs |
| |
| Messieurs, |
| Je n'ai toujours pas reçu ma marchandise. |
| Je souhaite être remboursé. |
| De : Les Voleurs, 11/01/2017 |
| A : John Doe |
| |
| Monsieur, |
| |
| Le délai de 48 heures est compté à partir du départ usine. |
| |
| Renseignement pris, votre marchandise n'a toujours pas été fabriquée. |
| De : John Doe, 10/01/2017 |
| A : Les Voleurs |
| |
| Messieurs, |
| |
| Je n'ai toujours pas reçu ma marchandise. |
| |
| Vous indiquiez un délai de 48 heures. |
| |
| Qu'en est-il ? |
| De : Les Voleurs, 01/01/2017 |
| A : John Doe |
| |
| Monsieur, |
| |
| Nous avons pris en compte votre commande. |
| |
| Votre marchandise vous sera livrée sous un délai de 48 heures. |

Le document allégé ainsi édité occupe, grâce à la suppression de tout ou partie des occurrences multiples, un espace mémoire réduit et consomme moins d'énergie. D'un point de vue forme, il apparaît sensiblement plus compact et plus lisible. Si le document allégé est destiné à l'impression, cet allègement permet de réaliser des économies d'énergie et de consommables (encre, papier, électricité).

Il va de soi que le procédé qui vient d'être décrit est automatisé, et réalisé par un programme d'ordinateur implémenté sur une unité de traitement informatique (processeur) intégrée à un ordinateur de bureau ou un serveur (physique ou virtuel), une imprimante.

Selon un mode particulier de réalisation, tous les messages unitaires peuvent même être supprimés du document allégé, seul le message principal étant conservé. Cette suppression est avantageusement accessible de manière optionnelle via une commande dédiée sur une console de commande d'édition du message allégé.

La mise en oeuvre des différentes étapes peut se faire au sein même du système de messagerie électronique. A cet effet, le programme évoqué ci-dessous se présente avantageusement sous forme d'un plugin ou d'un addin, livré nativement dans le système de messagerie ou ajouté ultérieurement. En variante, le programme se présente sous forme d'une application séparée du système de messagerie.

Les différentes étapes sont commandées par des instructions correspondantes d'un programme informatique implémenté sur une unité de contrôle informatisée intégrée à un ordinateur ou un serveur (physique ou virtuel).

On notera qu'il est envisageable de calculer (et éventuellement d'afficher) la proportion de contenu du courrier électronique supprimé du document allégé (ou a contrario la proportion de contenu conservé).

Il est également envisageable, pour rendre le plus compact possible le document allégé, de supprimer les éventuelles lignes vides ou espaces surnuméraires.

En revanche, il est préférable de conserver certaines données ayant une mise en forme particulière, par ex. sous forme de tableau. Il peut également être préférable de conserver les images (autres que celles de signature).

## Revendications

1. Procédé d'édition, à partir d'un système de messagerie électronique, d'un document allégé à partir d'un courrier électronique comprenant une succession de messages unitaires rappelés, ce procédé comprenant les opérations consistant à :
- Editer le courrier électronique ;
- Identifier dans le courrier électronique les messages unitaires rappelés ;
- Analyser chaque message unitaire rappelé ainsi identifié ;
- Détecter des éléments ayant plusieurs occurrences dans plusieurs messages unitaires rappelés ;
- Editer le document allégé en conservant au plus une occurrence unique de tout élément détecté comme ayant plusieurs occurrences.

2. Procédé selon la revendication 1, **caractérisé en ce que** l'étape d'identification des messages unitaires est précédée d'une étape de détermination de la structure informatique du courrier électronique édité, et **en ce que** l'étape d'identification des messages unitaires rappelés comprend la détection, dans la structure informatique du courrier électronique, d'au moins un champ d'en-tête.

3. Procédé selon la revendication 1 ou la revendication 2, **caractérisé en ce que** la détection d'un champ d'en-tête comprend la détection de l'un au moins des mots-clés suivants, situé en tête d'une ligne de caractères : de, à, date, envoyé, Cc, copie, objet, sujet, re.

4. Procédé selon l'une des revendications 1 à 3, **caractérisé en ce que** l'analyse de chaque message unitaire comprend la détection, dans ce message, d'un corps de ce message.

5. Procédé selon la revendication 4, **caractérisé en ce que** l'étape d'analyse comprend la détection de l'un au moins des éléments suivants : signature, mention légale.

6. Procédé selon la revendication 5, **caractérisé en ce que** l'étape d'analyse est suivie d'une étape de mémorisation, dans une base de données dictionnaire, de l'élément détecté, et **en ce que** la détection de tout nouvel élément dans un autre message rappelé du courrier électronique est suivie d'une comparaison de cet élément aux éléments mémorisés de même nature.

7. Procédé selon la revendication 6, **caractérisé en ce que** l'élément comparé est supprimé du document allégé s'il est identique à un élément déjà mémorisé.

8. Procédé selon l'une des revendications 5 à 7, **caractérisé en ce que** la détection d'une signature comprend la détection, dans le corps du message, de l'un au moins des mots-clés suivants, situé en tête d'une ligne de caractères : mail, email, courriel, web, site, blog, téléphone, tel, fax, mobile, adresse, assistant, assistante, chef, direction, directeur, manager, consultant, ingénieur, quai, rue, avenue, impasse, chemin.

9. Procédé selon l'une des revendications 5 à 8, **caractérisé en ce que** la détection d'une signature comprend la détection d'au moins une image.

10. Procédé selon la revendication 9, **caractérisé en ce qu'**il comprend la suppression, dans le document allégé, de toute image détectée dans le courrier électronique.

11. Procédé selon l'une des revendications 5 à 8, **caractérisé en ce que** la détection d'une signature ignore la présence de toute image éventuelle.

12. Procédé selon l'une des revendications 5 à 11, **caractérisé en ce que** la détection d'une mention légale comprend la détection de l'un au moins des mots-clés suivants : avertissement, disclaimer, message, internet, information, erreur, virus, émetteur, expéditeur, intégrité, environnement, responsabilité, confidentiel, règlementation, interdit.

13. Procédé selon l'une des revendications précédentes, **caractérisé en ce que** l'étape d'édition du courrier électronique est suivie d'une étape de détection, dans le courrier électronique, d'au moins une barre de séparation entre deux messages rappelés.

14. Procédé selon la revendication 13, **caractérisé en ce que** la barre détectée est remplacée, dans le document allégé, par une barre plus fine.

15. Procédé selon l'une des revendications précédentes, **caractérisé en ce qu'**il comprend une opération de détection de tout lien hypertexte dans le courrier électronique, et **en ce que** le document édité est dépourvu de tout lien hypertexte.

16. Procédé selon l'une des revendications précédentes, **caractérisé en ce qu'**il comprend une opération de détection de toute surbrillance dans le courrier électronique, et **en ce que** le document édité est dépourvu de toute surbrillance.

17. Procédé selon l'une des revendications précédentes, **caractérisé en ce qu'**il comprend la suppression de tous les messages unitaires rappelés.

18. Procédé d'impression d'un document électronique à partir d'un courrier électronique comprenant une succession de messages unitaires rappelés, ce procédé comprenant, outre la succession d'étapes du procédé d'édition selon l'une des revendications précédentes, une étape d'impression du document allégé édité.
